# EUROPEAN PATENT SPECIFICATION

(11) **EP 1 268 200 B1**
(45) Date of publication and mention of the grant of the patent: **25.07.2007**
(21) Application number: 01918067.8
(22) Date of filing: 26.03.2001
(51) Int. Cl.: B32B 27/08, B32B 37/00, B44C 5/04

(54) **FLOORING LAMINATE AND A PROCESS FOR THE PRODUCTION THEREOF**
BODENLAMINAT UND HERSTELLUNGSVERFAHREN VON DIESEM
LAMELLE DE REVETEMENT DE PLANCHER ET PROCEDE DE PRODUCTION ASSOCIE

(30) Priority: 28.03.2000 SE 0001084
(43) Date of publication of application: 02.01.2003
(73) Proprietor: Pergo (Europe) AB, 231 25 Trelleborg (SE)
(72) Inventor: SJÖLIN, Hans, S-284 33 Perstorp (SE); LINDGREN, Kent, S-284 32 Perstorp (SE)
(74) Representative: HOFFMANN EITLE
(86) International application number: PCT/SE2001/000651
(87) International publication number: WO 2001/072512

(56) References cited:
- EP-A1- 0 803 351
- EP-A2- 0 590 693
- WO-A1-95/11333
- DE-A1- 4 427 085
- GB-A- 1 399 624
- US-A- 4 597 818
- US-A- 5 728 476
- US-A- 6 132 883

## Description

The present invention relates to a decorative, abrasion resistant flooring laminate having a distinct surface decor and a process for the production thereof.

Decorative thermosetting laminates are wellknown and used for instance as covering material on walls, cupboard doors and desks, on tables and other furniture and as flooring material.

Such laminates are often made of two to seven Kraft paper sheets impregnated with phenol-formaldehyde resin, a monochromatic or patterned decor sheet impregnated with melamine-formaldehyde resin and a fine so-called overlay sheet of α-cellulose impregnated with melamine-formaldehyde resin. Document EP-A-0803351 relates to a laminate made of a melamine resin and a transparent topcoat layer. In order to bond the two layers together it is necessary to employ a glue layer.

The overlay sheet is intended to protect the decor sheet from abrasion. In certain cases the overlay sheet is omitted.

There are also laminates consisting of a base of particle board or fibre board provided with such a decor sheet and possibly an overlay sheet. These sheets can be laminated to the base under heat and pressure.

During the last years it has been possible to improve the abrasion resistance and other properties of such laminates whereby they have got a very extensive use as a flooring laminate. Usually the laminate is then glued to a base such as a hard wood fibre board. The individual laminate boards made from the laminate covered fibre board usually have a size of 20 x 120 cm and they are furnished with some kind of tongue-groove joint in the side edges.

These laminate floorings have become especially popular not least since they are of the so-called do-it-yourself type and can be installed on top of existing flooring material also by persons not being skilled. Document WO-A-95/11333 relates to a floor covering comprising an ionomer topcoat. The latter provides an excellent gloss retention and resistance to abrasion, scuffing, scratching and staining. This topcoat possesses a high transparency and is free from yellowness.

In certain cases such laminate floorings can be experiences to be hard and cold. Moreover, the decor pattern, especially a dark one can be less distrinct.

According to the present invention it has been possible to solve the above problems to a great extent. The invention then relates to a process for the production of an abrasion resistant decorative flooring laminate having a distinct decor, which laminate comprises at least one paper sheet impregnated with a thermosetting resin and possibly a base layer. The process is characterized in that a paper web or a paper sheet impregnated with a thermosetting resin such as melamine-formaldehyde resin and then dried to a so-called prepreg is provided on one side at an increased temperature and an increased pressure continuously or discontinuously respectively with a surface layer consisting of an ionomeric thermoplastic and that the laminate thus obtained is cooled under pressure whereby the thermoplastic layer on such a sheet or web formed laminate is present in the abrasive resistant surface layer of the flooring laminate.

The paper web or paper sheet coated with ionomeric thermoplastic consists of an overlay paper, preferably of α-cellulose or a so-called decor sheet which can be monochromatic or patterned.

At a preferred embodiment of the invention the above thermoplastic coated paper sheet or paper web respectively is an overlay paper which is placed above a decor paper impregnated with a thermosetting resin, preferably melamine-formaldehyde resin and dried before the laminating step, a so-called prepreg.

Often the abrasion resisting layer of the laminate consists solely of the ionomeric thermoplastic layer, which per se is very abrasion resisting. At the embodiments where no overlay sheet is present in the laminate but the ionomeric thermoplastic layer is applied directly on the decor sheet the laminate will in spite of that get enough abrasion resistance.

If the ionomeric thermoplastic layer is instead applied on the overlay, the abrasion resistance will increase since the overlay paper can contain hard particles with a size of 30-150µm, preferably 40-100 µm distributed within the paper per se or in a surface layer of thermosetting resin on the paper.

Suitably the hard particles consist of aluminium oxide, silica and/or silicon carbide.

Usually the hard particles are applied in an amount of 3-30 g/m², preferably 5-25 g/m² or most preferably 6-20 g/m².

According to another embodiment of the invention the decor sheet is provided with a layer of ionomeric thermoplastic and on top of the thermoplastic layer an overlay is placed which then usually has been provided with hard particles as mentioned above, which overlay will make the upper surface layer of the laminate in this case.

At an especially preferred embodiment of the invention the base layer consists of one or more conventional dry prepreg webs or prepreg sheets respectively placed on top of each other and impregnated with a thermosetting resin such as phenol-formaldehyde resin, whereby the base layer and the flooring laminate are formed and joined together in the same sequence and the webs or a file of sheets respectively are laminated together continuously or discontinuously respectively under pressure and increased temperature and a final cooling under pressure.

It is also possible to use a base layer consisting of particle board, fibre board, plastic sheet or the like. The finished laminate is then preferably attached to the base layer in a separate subsequent step for example by glueing or the like. The laminate can also be present in the form of a roll, whereby a continuous process is possible where the fibre boards are fed directly after each other edge to edge and bonded to the laminate, preferably by gluing.

Of course you can also use a discontinuous process if the laminate is instead present in the form of sheets.

The ionomeric thermoplastic is suitably applied in the form of a foil. At the increased temperature in the press the foil melts and the applied pressure results in a strong adhesion to the paper containing thermosetting resin situated below.

It is also possible to use an ionomeric thermoplastic in the form of particles such as granules or the like evenly distributed over the paper impregnated with thermosetting resin placed below.

At the laminating step the temperature is normally 120-200°C, preferably 140-180°C. The thermosetting resin present in the paper webs or paper sheets respectively will cure at that temperature. At the same time the ionomeric thermoplastic melts and sticks firmly to the paper below.

The pressure at the warm part of the process as well as at the subsequent cooling amounts to 1-100 bar. At a discontinuous laminating the pressure preferably amounts to 20-100 bar and at a continuous laminating preferably to 10-50 bar.

The finishing cooling of the laminate under pressure included in the process is necessary to obtain a fine, strongly adhering surface without blisters and similar defects.

The ionomeric thermoplastic can for example be a ethylene methacrylic acid copolymer, whereby the ions for instance consist of sodium, zinc or lithium. Also other ionomeric thermoplastics can be used.

At continuous laminating according to one embodiment of the invention suitably a double belt press of known type is used with cooling at the end part of the press.

A discontinuous pressing according to the second embodiment of the invention can take place for instance in a conventional multi-etage press where many laminates are pressed at the same time. Then you normally have a press plate between each laminate package.

Preferably a release foil is applied on top of the ionomeric thermoplastic foil before the laminating step to prevent that the thermoplastic layer sticks to press belt or press plates respectively.

As mentioned above the invention also relates to a decorative, abrasion resistant flooring laminate having a distinct surface decor. The laminate comprises a decor sheet of paper impregnated with a thermosetting resin such as melamine-formaldehyde resin, and possibly on top of the decor sheet a so-called overlay of paper preferably of α-cellulose impregnated with a thermosetting resin such as melamine-formaldehyde resin and possibly a base layer. The laminate is characterized in that it has an abrasion resistant surface layer comprising a layer of ionomeric thermoplastic.

The ionomeric thermoplastic can for instance consist of ethylene methacrylic acid copolymer where the ions for instance consist of sodium, zinc or lithium. One suitable thermoplastic is marketed by Du Pont under the trademark SURLYN^{®}.

The base layer of the laminate can as mentioned above consist of one or more paper webs or paper sheets respectively impregnated with a thermosetting resin preferably phenol-formaldehyde resin and joined with the other paper webs or paper sheets respectively. Alternatively, the base layer can consist of particle board, fibre board and plastic sheet etc.

The layer of ionomeric thermoplastic which is included in the abrasive resistant surface layer is very transparent. This gives the effect that the pattern of the decor sheet underneath, for example a wooden pattern will appear especially, distinctly and rich in contrast in the laminate produced.

Normally the thermoplastic surface layer will be experienced as softer and warmer than the usual thermosetting plastic surface. In addition the thermoplastic layer gives a certain sound-absorbing effect.

The invention will be explained further in connection with the following embodiment examples 1-3, where example 1 shows production of a laminate where an ionomeric thermoplastic is applied to an overlay. The thermoplastic layer makes the very uppermost wearing layer and the overlay a lower wearing layer which also assists to protect the decor layer from wear. In example 2 the ionomeric thermoplastic layer is applied to a decor sheet.

An overlay is missing why the wearing layer wholly consists of the thermoplastic layer. In example 3 an overlay is placed on top of a decor sheet which on its upper side has a layer of ionomeric thermoplastic. Here the overlay makes the very uppermost wearing layer and the thermoplastic layer assists in protecting the decor sheet towards wear.

### Example 1

A roll of so-called overlay paper of α-cellulose with a surface weight of 25 g/m² was impregnated with a melamine-formaldehyde resin solution to a resin content of 72 % by weight calculated on dry impregnated paper. Immediately after the impregnating of the transparent α-cellulose paper but before the drying, aluminium oxide particles in an amount of 8 g/m² and with an average particle size of 60 µm were applied to the upper side of the paper as mentioned in the Swedish patent 460274. The impregnated and aluminium oxide coated paper web was then fed into a heating oven where the solvent was evaporated. At the same time the resin was partially cured to so-called B-stage. At the drying the aluminium oxide particles were enclosed in the resin layer and thus concentrated to the surface of the so-called prepregs produced.

A roll of conventional nontransparent so-called decor paper having a surface weight of 80 g/m² was treated in the same way as the overlay paper but without any addition of aluminium oxide. The resin content was 46 % by weight calculed on dry impregnated paper.

A roll of Kraft paper having a surface weight of 150 g/m² was also treated in the same way with the exception that the resin consisted of phenol-formaldehyde resins. The resin content was 36 % by weight calculated on dry impregnated paper:

One structure foil of paper-plastic, one ionomeric thermoplastic polymer foil having a thickness of 0.22 mm, one sheet of the above overlay paper, one sheet of the above decor paper and two sheets of the above Kraft paper were placed between two press plates according to the sketch below.
..... Press plate
..... Structure foil
................................ Ionomeric thermoplastic polymer foil (SURLYN^{®} 1706 from Du Pont)
..... Overlay sheet
..... Decor sheet
..... Base layer of 2 Kraft paper sheets
................................ Press plate

These impregnated paper sheets structure paper and ionomeric polymer foil were pressed between the pressplates in a conventional etage press at a press pressure of 35 bar and a temperature of 165°C for 60 seconds to a homogeneous laminate, whereupon the laminate at the same pressure was cooled to 30°C. The structure foil was not included in the laminate but was pulled off after the pressing. The structure foil was used to transfer a surface structure to the laminate and at the same time work as a release foil between the press plate and the ionomeric thermoplastic.

The abrasion resistance of the laminate obtained was tested according to the standard prEN 13329 by means of an Taber Abraser model 503. According to this standard an abrasion resistance value of 4400 revolutions was obtained. The scratch resistance was measured according to EN 438 to 1.7 Newton.

### Example 2

The process according to example 1 was repeated with the difference that the laminate was produced without an overlay paper. (See the sketch below).
..... Press plate
..... Structure foil
..... Ionomeric thermoplastic polymer foil (SURLYN^{®} 1706, Du Pont)
..... Decor sheet
..................................... Base layer, 2 Kraft paper sheets
..... Press plate

The abrasion resistance of the laminate obtained was tested according to the standard prEN 13329 by means of a Taber Abraser model 503. According to this standard an abrasion resistance value of 1100 revolutions was obtained. The scratch resistance was measured according to EN 438 to 1.7 Newton.

### Example 3

The process according to example 1 was repeated with the difference that the laminate was made with an overlay paper above the ionomeric thermoplastic polymer foil. (See the sketch below.)
..... Press plate
..... Structure foil
..... Overlay sheet
...................................... Ionomeric thermoplastic polymer foil (SURLYN^{®} 1706, Du Pont)
...................................... Decor sheet
...................................... Base layer, 2 sheets of Kraft paper
...................................... Press plate

The abrasion resistance of the laminate obtained was tested according to the standard prEN 13329 by means of a Taber Abraser model 503. According to this standard an abrasion resistance value of 4500 revolutions was obtained. The scratch resistance was measured according to EN 43 8 to 2.6 Newton.

The advantages of laminates built up in the above way as compared with ordinary thermosetting flooring laminates with a surface of thermosetting resin are in addition a remaining good abrasion resistance, that the laminates appear to be warmer and softer. In addition there will be lower sound levels when walking on the laminate. The decors will also become more distinct and the transparency better as compared to ordinary thermosetting flooring laminates with corresponding abrasion resistance properties.

The invention is not limited to the embodiments shown since these can be modified in various ways within the scope of the invention.

## Claims

1. Process for the production of an abrasion resistant decorative flooring laminate having a distinct decor, which laminate comprises at least one paper sheet impregnated with a thermosetting resin and optionally a base layer, **characterized in that** a paper web or a paper sheet impregnated with a thermosetting resin such as melamine-formaldehyde resin and then dried to a so-called prepreg, is provided on one side with a surface layer consisting of an ionomeric thermoplastic at an increased temperature and an increased pressure, continuously or discontinuously respectively which ionomeric thermoplastic melts under the mentioned conditions thereby obtaing a strong adhesion to the paper situated below and that the surface laminate thus obtained is cooled under pressure, whereby the thermoplastic layer on such a sheet or web formed laminate is present in the abrasive resistant surface layer of the flooring laminate.

2. Process according to claim 1, **characterized in that** the paper web or paper sheet respectively coated with thermoplastic is a so-called overlay paper, preferably made of α-cellulose or a so-called decor sheet which can be monochromatic or patterned.

3. Process according to claim 1 or 2, **characterised in that** the paper sheet or paper web coated with thermoplastic is an overlay paper which is placed above a decor paper impregnated with a thermosetting resin, preferably melamine-formaldehyde resin and dried before the laminating step, so-called prepreg.

4. Process according to claim 1 or 2, **characterized in that** the paper sheet or paper web coated with thermoplastic is a decor sheet, whereby an overlay impregnated with a thermosetting resin, preferably melamine-formaldehyde resin is placed as the uppermost part of the flooring laminate.

5. Process according to any one of claims 2-4, **characterized in that** the overlay paper contains hard particles having a size of 30-150 µm, preferably 40-100 µm distributed within the paper per se or in a thermosetting resin surface layer on the paper.

6. Process according to claim 5, **characterized in that** the hard particles consist of aluminium oxide, silica and/or silicon carbide.

7. Process according to any one of claims 5 or 6, **characterized in that** the hard particles are added in an amount-of 3-30 g/m², preferably 5-25 g/m², or most preferably 6-20 g/m².

8. Process according to any one of claims 1-7, **characterized in that** the base layer consists of one or more conventional dry prepreg webs or prepreg sheets respectively placed on top of each other, and impregnated with a thermosetting resin such as fenol-formaldehyde resin whereby the base layer and the flooring laminate are formed and joined together in the same sequence and the webs or a pile of sheets respectively are laminated together continuously or discontinuously respectively under pressure and increased temperature and a subsequent cooling under pressure.

9. Process according to any one of claims 1-7, **characterized in that** the base layer consists of particle board, fibre board a plastic sheet or the like, whereby the finished laminate is preferably joined to the base layer in a separate subsequent step for instance by gluing or the like.

10. Process according to any one of claims 1-9, **characterized in that** the ionomeric thermoplastic is applied in the form of a foil which at the increased temperature melts and by the applied pressure gets a strong adhesion to the paper underneath containing thermosetting resin.

11. Process according to any one of claims 1-10, **characterized in that** the pressure at the warm part of the process as well as at the subsequent cooling is 1-100 bar, preferably 20-100 bar at a discontinuous laminating and 10-50 bar at a continuous laminating.

12. Process according to any one of claims 1-11, **characterized in that** the temperature at the laminating step amounts to 120-200°C, preferably 140-180°C.

13. Process according to any one of claims 1-12, **characterized in that** the ionomeric thermoplastic consists of an ethylene-methacrylic acid copolymer, whereby the ions for instance consist of sodium, zinc or lithium.

14. Process according to any one of claims 1-13, **characterized in that** a release foil is used on top of the ionomeric thermoplastic at the laminating step to avoid that the thermoplastic layer sticks to moulding plate, press belt or the like.

15. A decorative, abrasion resistant flooring laminate having a distinct surface decor, which laminate comprises a decor sheet of paper impregnated with a thermosetting resin such as melamine-formaldehyde resin and possibly on top of the decor sheet a so-called overlay of paper, preferably of α-cellulose impregnated with a thermosetting resin such as melamine-formaldehyde resin and optionally a base layer, **characterized in that** the flooring laminate is manufactured with an abrasive resistant surface layer comprising a ionomeric thermoplastic through the process according to any of the claims 1-14.

16. Flooring laminate according to claim 15, **characterized in that** the ionomeric thermoplastic consists of ethylene-methacrylic acid copolymer whereby the ions for instance consist of sodium, zinc or lithium.

17. Laminate according to any one of claims 15 or 16, **characterized in that** the base layer consists of one or more paper webs or paper sheets moulded together with the other paper webs or paper sheets respectively impregnated with a thermosetting resin, preferably phenol-formaldehyde resin.

18. Laminate according to any one of claims 15 or 16, **characterized in that** the base layer consists of fibre board, particle board, a plastic sheet or the like.

## Patentansprüche

1. Verfahren zur Erzeugung eines abriebresistenten dekorativen Bodenlaminats mit einem ausgeprägten Dekor, wobei das Laminat zumindest eine Papierlage, die mit einem wärmehärtenden Harz imprägniert ist, und wahlweise eine Grundschicht umfaßt, **dadurch gekennzeichnet, daß** eine Papierbahn oder eine Papierlage, die mit einem wärmehärtenden Harz wie Melamin-Formaldehydharz imprägniert und dann unter Bildung eines sogenannten Prepreg getrocknet ist, auf einer Seite mit einer Oberflächenschicht bestehend aus einem ionomeren thermoplastischen Material, bei einer erhöhten Temperatur und einem erhöhten Druck kontinuierlich oder diskontinuierlich versehen ist, wobei das ionomere thermoplastische Material unter den erwähnten Bedingungen schmilzt, unter Erhalt einer starken Adhäsion an dem Papier, das darunter angeordnet ist, und daß das somit erhaltene Oberflächenlaminat unter Druck gekühlt wird, wodurch die thermoplastische Schicht auf einem solchen mit einer Lage oder Bahn versehenen Laminat in der abriebresistenten Oberflächenschicht des Bodenlaminats vorhanden ist.

2. Verfahren nach Anspruch 1, **dadurch gekennzeichnet, daß** die Papierbahn oder die Papierlage, die mit einem thermoplastischen Material beschichtet ist, ein sogenanntes Auflagenpapier, das bevorzugt aus α-Cellulose erzeugt ist, oder eine sogenannte Dekorlage ist, die monochromatisch oder gemustert sein kann.

3. Verfahren nach Anspruch 1 oder 2, **dadurch gekennzeichnet, daß** die Papierlage oder Papierbahn, die mit dem thermoplastischen Material beschichtet ist, ein Auflagenpapier ist, das oberhalb eines Dekorpapiers angeordnet ist, das mit einem wärmehärtenden Harz imprägniert ist, bevorzugt Melamin-Formaldehydharz, und das vor dem Laminationsschritt getrocknet wird, das als Prepreg bezeichnet wird.

4. Verfahren nach Anspruch 1 oder 2, **dadurch gekennzeichnet, daß** die Papierlage oder Papierbahn, die mit dem thermoplastischen Material beschichtet ist, ein Dekorblatt ist, wobei eine Auflage, die mit einem thermoplastischen Harz, bevorzugt Melamin-Formaldehydharz, imprägniert ist, als oberster Teil des Bodenlaminats angeordnet ist.

5. Verfahren nach einem der Ansprüche 2 bis 4, **dadurch gekennzeichnet, daß** das Auflagenpapier harte Teilchen mit einer Größe von 30 bis 150 µm, bevorzugt 40 bis 100 µm, umfaßt, die innerhalb des Papiers per se oder in einer wärmehärtenden Harzoberflächenschicht auf dem Papier verteilt sind.

6. Verfahren nach Anspruch 5, **dadurch gekennzeichnet, daß** die harten Teilchen aus Aluminiumoxid, Siliziumdioxid und/oder Siliziumcarbid bestehen.

7. Verfahren nach einem der Ansprüche 5 oder 6, **dadurch gekennzeichnet, daß** die harten Teilchen in einer Menge von 3 bis 30 g/m², bevorzugt 5 bis 25 g/m² oder besonders bevorzugt 6 bis 20 g/m², zugegeben werden.

8. Verfahren nach einem der Ansprüche 1 bis 7, **dadurch gekennzeichnet, daß** die Grundschicht aus einer oder mehreren konventionellen trockenen Prepregbahnen oder Prepreglagen besteht, die jeweils übereinander gelegt sind, und die mit einem wärmehärtenden Harz wie Phenol-Formaldehydharz imprägniert ist, wodurch die Basisschicht und das Bodenlaminat in der gleichen Reihenfolge gebildet und miteinander verbunden werden und die Bahnen oder ein Stapel aus Lagen jeweils zusammen kontinuierlich oder diskontinuierlich unter Druck und erhöhter Temperatur und durch anschließende Kühlung unter Druck laminiert sind.

9. Verfahren nach einem der Ansprüche 1 bis 7, **dadurch gekennzeichnet, daß** die Grundschicht aus einer Spanplatte, Faserplatte, Kunststofflage oder dergleichen besteht, wobei das endgültige Laminat bevorzugt mit einer Basisschicht in einem getrennten anschließenden Schritt beispielsweise durch Verleimen oder dergleichen verbunden ist.

10. Verfahren nach einem der Ansprüche 1 bis 9, **dadurch gekennzeichnet, daß** das ionomere thermoplastische Material in der Form einer Folie aufgetragen wird, die bei erhöhter Temperatur schmilzt und durch den auferlegten Druck eine starke Adhäsion zum darunterliegenden Papier erfährt, das das wärmehärtende Harz enthält.

11. Verfahren nach einem der Ansprüche 1 bis 10, **dadurch gekennzeichnet, daß** der Druck beim warmen Teil des Verfahrens ebenso wie beim anschließenden Kühlen 1 bis 100 bar, bevorzugt 20 bis 100 bar beim diskontinuierlichen Laminieren und 10 bis 50 bar beim kontinuierlichen Laminieren ist.

12. Verfahren nach einem der Ansprüche 1 bis 11, **dadurch gekennzeichnet, daß** die Temperatur beim Laminationsschritt 120 bis 200°C, bevorzugt 140 bis 180°C, ausmacht.

13. Verfahren nach einem der Ansprüche 1 bis 12, **dadurch gekennzeichnet, daß** das ionomere thermoplastische Material aus einem Ethylen-Methacrylsäure-Copolymer besteht, wobei die Ionen beispielsweise aus Natrium, Zink oder Lithium bestehen.

14. Verfahren nach einem der Ansprüche 1 bis 13, **dadurch gekennzeichnet, daß** eine Ablösungsfolie auf der oberen Seite des ionomeren thermoplastischen Materials beim Laminationsschritt verwendet wird, um zu verhindern, daß die thermoplastische Schicht an die Formgebungsplatte, den Druckgurt oder dergleichen anhaftet.

15. Dekoratives, abriebresistentes Bodenlaminat mit einem deutlichen Oberflächendekor, wobei das Laminat eine Dekorlage aus Papier, das mit einem wärmehärtenden Harz imprägniert ist, wie Melamin-Formaldehydharz, und gegebenenfalls oberhalb der Dekorlage eine sogenannte Auflage aus Papier umfaßt, bevorzugt aus α-Cellulose, die mit einem wärmehärtenden Harz wie Melamin-Formaldehydharz imprägniert ist, und wahlweise eine Grundschicht enthält, **dadurch gekennzeichnet, daß** das Bodenlaminat mit einer abriebresistenten Oberflächenschicht, umfassend ein ionomeres thermoplastisches Material, durch das Verfahren nach einem der Ansprüche 1 bis 14 hergestellt ist.

16. Bodenlaminat nach Anspruch 15, **dadurch gekennzeichnet, daß** das ionomere thermoplastische Material aus Ethylen-Methacrylsäure-Copolymer besteht, wobei die Ionen beispielsweise aus Natrium, Zink oder Lithium bestehen.

17. Laminat nach einem der Ansprüche 15 oder 16, **dadurch gekennzeichnet, daß** die Basisschicht aus einer oder mehreren Papierbahnen oder Papierlagen besteht, die zusammen mit den anderen Papierlagen oder Papierbahnen geformt sind, die jeweils mit einem wärmehärtenden Harz, bevorzugt Phenol-Formaldehydharz, imprägniert sind.

18. Laminat nach einem der Ansprüche 14 oder 16, **dadurch gekennzeichnet, daß** die Basisschicht aus einer Faserplatte, Spanplatte, Kunststofflage oder dergleichen besteht.

## Revendications

1. Proceédé pour la production d'un stratifié de planchéiage décoratif résistant à l'abrasion ayant un décor distinct, lequel stratifié comprend au moins une feuille de papier imprégnée d'une résine thermodurcissable et optionnellement une couche de base, **caractérisé en ce qu'**une bande de papier ou une feuille de papier imprégnée d'une résine thermodurcissable telle qu'une résine mélamine-formaldéhyde et ensuite séchée en un dénommé préimprégné, est pourvue sur un côté avec une couche de surface constituée d'un thermoplastique ionomère à une température élevée et une pression élevée, respectivement de manière continue et discontinue lequel thermoplastique ionomère fond sous les conditions mentionnées pour obtenir ainsi une adhésion forte au papier situé en dessous et que le stratifié de surface ainsi obtenu est refroidi sous pression, grâce à quoi la couche thermoplastique sur un tel stratifié formé d'une feuille ou bande est présent dans la couche de surface résistante à l'abrasion du stratifié de planchéiage.

2. Procédé selon la revendication 1, **caractérisé en ce que** la bande de papier ou feuille de papier revêtue respectivement avec un thermoplastique est un papier appelé de revêtement, de préférence fabriqué de α-cellulose ou une feuille appelée de décor qui peut être monochromatique ou à dessin.

3. Procédé selon la revendication 1 ou 2, **caractérisé en ce que** la feuille de papier ou bande de papier revêtue avec un thermoplastique est un papier de revêtement qui est placé au-dessus d'un papier de décor imprégné d'une résine thermodurcissable, de préférence une résine mélamine-formaldéhyde et séché avant l'étape de stratification, appelé un préimprégné.

4. Procédé selon la revendication 1 ou 2, **caractérisé en ce que** la feuille de papier ou bande de papier revêtue avec un thermoplastique est une feuille de décor, grâce à quoi un revêtement imprégné d'une résine thermodurcissable, de préférence une résine mélamine-formaldéhyde est placé en tant que la partie la plus supérieure du stratifié de planchéiage.

5. Procédé selon l'une quelconque des revendications 2-4, **caractérisé en ce que** le papier de revêtement contient des particules dures ayant une taille de 30-150 µm, de préférence 40-100 µm distribuées dans le papier en tant que tel ou dans une couche de surface de résine thermodurcissable sur le papier.

6. Procédé selon la revendication 5, **caractérisé en ce que** les particules dures sont constituées d'oxyde d'aluminium, de silice et/ou de carbure de silicium.

7. Procédé selon l'une quelconque des revendications 5 ou 6, **caractérisé en ce que** les particules dures sont ajoutées en une quantité de 3-30 g/m², de préférence 5-25 g/m², ou le plus préférablement 6-20 g/m².

8. Procédé selon l'une quelconque des revendications 1-7, **caractérisé en ce que** la couche de base est constituée d'une ou plus de bandes de préimprégnés sèches conventionnelles ou des feuilles de préimprégnés placées respectivement les unes sur les autres, et imprégnées d'une résine thermodurcissable telle qu'une résine phénol-formaldéhyde grâce à quoi la couche de base et le stratifié de planchéiage sont formés et réunis conjointement dans la même séquence et les bandes ou une pile de feuilles respectivement sont stratifiées conjointement d'une manière continue ou discontinue respectivement sous pression et à une température élevée et un refroidissement subséquent sous pression.

9. Procédé selon l'une quelconques des revendications 1-7, **caractérisé en ce que** la couche de base est constituée d'un panneau de particules, d'un panneau de fibres, d'une feuille en plastique ou du même genre, grâce à quoi le stratifié achevé est de préférence réuni à la couche de base dans une étape ultérieure séparée par exemple par collage ou du même genre.

10. Procédé selon l'une quelconque des revendications 1-9, **caractérisé en ce que** le thermoplastique ionomère est appliqué sous la forme d'une feuille qui fond à la température élevée et par la pression appliquée a une adhésion forte au papier au-dessous contenant une résine thermodurcissable.

11. Procédé selon l'une quelconque des revendications 1-10, **caractérisé en ce que** la pression à la partie chaude du processus ainsi qu'au refroidissement ultérieur est de 1-100 bar, de préférence 20-100 bar à une stratification discontinue et 10-50 bar à une stratification continue.

12. Procédé selon l'une quelconque des revendications 1-11, **caractérisé en ce que** la température à l'étape de stratification s'élève à 120-200°C, de préférence 140-180°C.

13. Procédé selon l'une quelconque des revendications 1-12, **caractérisé en ce que** le thermoplastique ionomère est constitué d'un copolymère d'éthylène-acide méthacrylique, grâce à quoi les ions consistent en, par exemple, du sodium, du zinc ou du lithium.

14. Procédé selon l'une quelconque des revendications 1-13, **caractérisé en ce qu'**une feuille de libération est utilisée sur le dessus du thermoplastique ionomère à l'étape de stratification pour éviter que la couche thermoplastique colle à une plaque de moulage, une courroie de presse ou du même genre.

15. Stratifié de planchéiage décoratif, résistant à l'abrasion ayant un décor de surface distinct, lequel stratifié comprend une feuille de décor d'un papier imprégnée d'une résine thermodurcissable telle qu'une résine mélamine-formaldéhyde et possiblement sur la feuille de décor un dénommé recouvrement de papier, de préférence d'une α-cellulose imprégnée d'une résine thermodurcissable telle qu'une résine mélamine-formaldéhyde et optionnellement une couche de base, **caractérisé en ce que** le stratifié de planchéiage est fabriqué avec une couche de surface résistante à l'abrasion comprenant un thermoplastique ionomère pour le procédé selon l'une quelconque des revendications 1-14.

16. Stratifié de planchéiage selon la revendication 15, **caractérisé en ce que** le thermoplastique ionomère est constitué d'un copolymère d'éthylène-acide méthacrylique grâce à quoi les ions se composent, par exemple, de sodium, de zinc ou de lithium.

17. Stratifié selon l'une quelconque des revendications 15 ou 16, **caractérisé en ce que** la couche de base est constituée d'une ou plus de bandes de papier ou de feuilles de papier moulées conjointement avec les autres bandes de papier ou feuilles de papier imprégnées respectivement d'une résine thermodurcissable, de préférence une résine phénol-formaldéhyde.

18. Stratifié selon l'une quelconque des revendications 15 ou 16, **caractérisé en ce que** la couche de base est constituée d'un panneau de fibres, d'un panneau de particules, d'une feuille en plastique ou du même genre.
